# EUROPÄISCHE PATENTSCHRIFT

(11) **EP 0 622 037 B1**
(45) Veröffentlichungstag und Bekanntmachung des Hinweises auf die Patenterteilung: **28.08.1996**
(21) Anmeldenummer: 94102770.8
(22) Anmeldetag: 24.02.1994
(51) Int. Cl.: A47C 3/30, F16C 29/02, F16D 3/06

(54) **Längenverstellbare Säule für Stühle, Tische od.dgl.**
Adjustable column for chairs, tables or the like
Colonne règlable pour sièges, tables ou similaires

(30) Priorität: 27.04.1993 DE 4313766
(43) Veröffentlichungstag der Anmeldung: 02.11.1994
(73) Patentinhaber: SUSPA COMPART Aktiengesellschaft, D-90518 Altdorf (DE)
(72) Erfinder: Wolf, Herbert, D-90459 Nürnberg (DE); Harrer, Harald, D-92318 Neumarkt (DE)
(74) Vertreter: Rau, Manfred, Dr. Dipl.-Ing.

(56) Entgegenhaltungen:
- DE-A- 2 164 943
- DE-A- 3 817 767

## Beschreibung

Die Erfindung betrifft eine längenverstellbare Säule nach dem Oberbegriff des Anspruches 1.

Es ist eine derartige längenverstellbare Säule bekannt, bei der das Gehäuse der als Längenverstellelement dienenden Gasfeder einen unrunden, in der Regel sechskantigen, Querschnitt aufweist. Die zur Führung dienende Ausnehmung der Führungsbüchse weist einen entsprechenden Querschnitt auf. Diese Ausgestaltung ist außerordentlich aufwendig herzustellen und weist darüber hinaus den Nachteil auf, daß das Gehäuse sich bei relativ starken Verdrehbelastungen in der Führungsbüchse verkeilt, so daß keine einwandfreie male Verschiebung mehr möglich ist.

Der Erfindung liegt die Aufgabe zugrunde, eine längenverstellbare Säule der gattungsgemäßen Art so auszugestalten, daß mit einfachen Mitteln eine zuverlässig und störungsfrei wirkende Verdrehsicherung erreicht wird.

Diese Aufgabe wird erfindungsgemäß durch die Merkmale im Kennzeichnungsteil des Anspruches 1 gelöst. Durch die erfindungsgemäßen Maßnahmen wird erreicht, daß eine übliche längenverstellbare Säule, deren Längenverstellelement ein kreiszylindrisches Gehäuse aufweist, verwendet werden kann. Auf diesem Gehäuse wird das zusätzliche Verdrehsicherungs-Profil angebracht. Die Führungsbüchse muß entsprechend angepaßt werden. Weitere Teile bedürfen keiner Anpassung. Durch die Ausgestaltung mit dem Steg wird erreicht, daß auch bei relativ großen relativen Drehbelastungen zwischen dem Gehäuse einerseits und dem Standrohr andererseits keine Verkeilung auftritt. Der Steg liegt jeweils mit einer Flanke gegen eine entsprechende Anlagefläche der nutartigen Ausnehmung an.

Die Unteransprüche geben vorteilhafte und zum Teil erfinderische Ausgestaltungen wieder.

Weitere Merkmale, Einzelheiten und Vorteile der Erfindung ergeben sich aus der nachfolgenden Beschreibung eines Ausführungsbeispieles anhand der Zeichnung. Es zeigt
- Fig. 1: eine Längsansicht einer teilweise aufgebrochen dargestellten längenverstellbaren Säule,
- Fig. 2: einen Querschnitt durch die Säule gemäß der Schnittlinie II-II in Fig. 1,
- Fig. 3: einen Querschnitt durch ein Verdrehsicherungs-Profil und
- Fig. 4: eine Draufsicht auf eine Führungsbüchse.

Die in der Zeichnung dargestellte Stuhl-Säule weist ein Standrohr 1, in dem eine längenverstellbare Gasfeder als pneumatisches oder hydro-pneumatisches Kolben-Zylinder-Verstellelement angeordnet ist. Das Standrohr 1 und die Gasfeder 2 haben eine gemeinsame Mittel-Längs-Achse 3.

Ein äußeres kreiszylindrisches Gehäuse 4 der Gasfeder 2 ist in Richtung der Achse 3 verschiebbar in einer Führungsbüchse 5 abgestützt, die an einem - in der Zeichnung oberen - Ende 6 des Standrohres 1 angeordnet ist.

Aus dem Gehäuse 4 der Gasfeder ragt eine Kolbenstange 7 heraus, die über ein Axial-Wälzlager 8 gegenüber einer Bodenplatte 9 des Standrohres 1 in Richtung der Achse 3 abgestützt ist. Die Bodenplatte 9 befindet sich an dem dem einen Ende 6 entgegengesetzten anderen - in der Zeichnung unten dargestellten - Ende 10 des Standrohres 1. Ein das Axial-Wälzlager 8 durchsetzender Zapfen 11 der Kolbenstange 7 erstreckt sich durch eine zur Achse 3 konzentrisch ausgebildete Öffnung 12 der Bodenplatte 9. Er ist gegen die Unterseite der Bodenplatte 9 mittels einer Beilagscheibe 13 und eines Feder-Sicherungsrings 14 gegen ein Herausziehen gesichert. Da sie mit ihrer Kolbenstange 7 in Richtung der Achse 3 gegenüber dem Standrohr 1 festgelegt ist, wird bei Längenverstellungen der Gasfeder 2 durch Betätigung eines Betätigungsstiftes 15 das Gehäuse 4 der Gasfeder 2 aus dem Standrohr 1 herausgefahren oder in dieses hineingeschoben. Der Betätigungsstift 15 befindet sich an dem der Kolbenstange 7 entgegengesetzten Ende des Gehäuses 4 der Gasfeder 2. Hier wird auch ein Stuhlsitz oder eine Tischplatte an einem gegebenenfalls konischen Befestigungsabschnitt 16 des Gehäuses 4 befestigt.

Das Standrohr 1 weist benachbart zum Ende 10 einen sich zu diesem hin leicht konisch verjüngenden Konusabschnitt 17 auf, mittels dessen eine Befestigung des Standrohres 1 in einer entsprechenden Konusbüchse eines Stuhlkreuzes od. dgl. möglich ist.

Im Gehäuse 4 der Gasfeder 2 ist - ebenfalls koaxial zur Achse 3 - ein zylindrisches Innenrohr 18 angeordnet, zwischen dem und dem Gehäuse 4 ein ringförmiger Überströmkanal 19 ausgebildet ist. Am im Gehäuse 4 befindlichen Ende der Kolbenstange 7 ist ein Kolben 20 angebracht, der abgedichtet an der Innenwand des Innenrohrs 18 anliegt.

Die ringscheibenförmige Bodenplatte 9 stützt sich auf einen topfförmig nach innen gerollten Rand 21 des Standrohres 1 im Bereich von dessen Ende 10 ab. Dieser nach innen gerollte Rand 21 weist im Querschnitt etwa eine Halbkreisform auf, d. h. er hat etwa den Querschnitt eines Halb-Kreisrings.

Um ein Herausziehen der Bodenplatte 9 nach oben aus dem Standrohr 1 zu verhindern, sind unmittelbar oberhalb der Bodenplatte 9 im Standrohr 1 aus dessen Innenwand vorragende Vorsprünge 22 ausgebildet, die durch Eindrücken von außen erzeugt werden können. Beispielsweise können sechs solcher Vorsprünge 22 gleichmäßig auf dem Umfang verteilt vorgesehen sein. Diese Maßnahme dient dazu zu verhindern, daß beispielsweise bei einem Hochheben des Stuhls an seinem Sitzteil die Gasfeder 2 mit Bodenplatte 9 aus dem Standrohr 1 nach oben herausgezogen wird. Diese Vorsprünge 22 haben also keine größeren Kräfte, sondern nur das Gewicht des Standrohres 1 mit einem daran befestigten Fußkreuz aufzunehmen.

Soweit die Gasfeder 2 bis hierher beschrieben ist, ist sie allgemein bekannt, handelsüblich und beispielsweise in der DE-PS 19 31 012 (entsprechend US-PS 3 711 054) dargestellt und beschrieben. Soweit die primär als Stuhl-Säule, aber auch als Säule für Tische od.dgl. dienende Säule bis hierher beschrieben ist, ist sie ebenfalls allgemein bekannt und beispielsweise in der DE 38 33 959 A1 (entsprechend US-PS 4 969 619) dargestellt und beschrieben.

Auf der kreiszylindrischen Außenwand 23 des Gehäuses 4 der Gasfeder 2 ist ein Verdrehsicherungs-Profil 24 befestigt. Dieses Verdrehsicherungs-Profil 24 weist einen ringzylindrischen, also rohrförmigen Abschnitt 25 auf, von dessen Außenumfang mehrere, im vorliegenden Fall bevorzugt drei, Stege 26 vorstehen, die parallel zur Achse 3 verlaufen. Der rohrförmige Abschnitt 25 weist eine Dicke a auf, die etwa der Dicke b des Gehäuses 4 entspricht. Die Stege 26 weisen Flanken 27 auf, die parallel zur einem Radius 28 verlaufen, der sich von der Achse 3 durch die Mitte eines Steges 26 erstreckt.

Das Verdrehsicherungs-Profil 24 besteht aus Aluminium bzw. einer Aluminiumlegierung und ist durch Strangpressen hergestellt. Es weist in nicht auf das Gehäuse 4 aufgezogenem Zustand einen Innendurchmesser d auf, der etwas Kleiner ist als der Außendurchmesser D des Gehäuses 4, wobei jeweils Umgebungstemperatur zugrundegelegt wird. Durch Erwärmen des Profils 24 beispielsweise auf 180° wird dessen Innendurchmesser d auf etwas mehr als D vergrößert, so daß das Profil 24 auf das Umgebungstemperatur aufweisende Gehäuse 4 aufgeschoben werden kann. Nach dem Abkühlen sitzt das Profil 24 fest und undrehbar auf dem Gehäuse 4. Da der Werkstoff des Profils 24 deutlich weicher ist als der Stahl, aus dem das Gehäuse 4 besteht, und als die üblicherweise auf dessen Außenfläche angebrachte Schicht aus Hartchrom, drückt sich das Aluminium des Profils 24 in winzige Riefen, die in der Außenoberfläche des Gehäuses 4 sind, wodurch die Verankerung zwischen dem Profil 24 und dem Gehäuse 4 noch verbessert wird. Die in der Gasfeder 2 befindlichen Dichtungen nehmen durch die Temperaturbelastung keinen Schaden, da durch das Aufschrumpfen des Profils 24 auf das Gehäuse 4 im Innenraum der Gasfeder 2 nur Temperaturen auftreten, die deutlich unter 100°C sind. Da die Dicken a und b etwa gleich sind, ist die Wärmespeicherkapazität des Profils 24 nicht größer, sondern eher Kleiner als diejenige der Gasfeder 2, was zu einer nur relativ geringen Erwärmung der Gasfeder führt. Aufgrund der Tatsache, daß das Profil 24 aus Aluminium oder einer Aluminiumlegierung und das Gehäuse 4 der Gasfeder 2 aus Stahl besteht, besteht auch keinerlei Gefahr, daß beim Aufschrumpfen des Profils 24 auf das Gehäuse 4 letzteres deformiert wird.

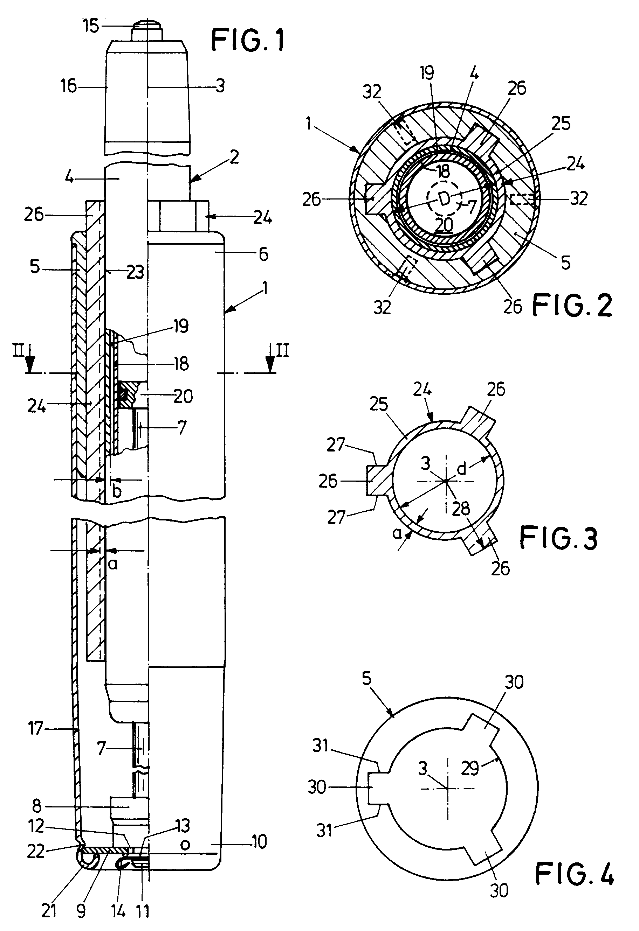

Wie Fig. 1 entnehmbar ist, erstreckt sich das Verdrehsicherungs-Profil 24 über den größten Teil der Länge des Gehäuses 4 mit Ausnahme der Endabschnitte, von denen einer der Befestigungsabschnitt 16 der Gasfeder 2 ist.

Die Führungsbüchse 5 weist - wie den Fig. 2 und 4 entnehmbar ist - einen dem Querschnitt des Verdrehsicherungs-Profils 24 angepaßten Innenquerschnitt auf. Es weist also eine kreiszylindrische innere Ausnehmung 29 auf, die dem Außendurchmesser des Abschnittes 25 entspricht, so daß dieser im wesentlichen spielfrei in der Ausnehmung 29 geführt wird. Die Ausnehmung 29 ist zusätzlich mit drei in gleichen Winkelabständen über ihren Umfang verteilt angeordneten nutartigen Ausnehmungen 30 versehen, deren Querschnitt dem der Stege 26 entspricht. Insbesondere weisen diese nutartigen Ausnehmungen 30 Anlageflächen 31 auf, gegen die sich die Flanken 27 des Verdrehsicherungs-Profils 24 weitestgehend spielfrei abstützen. Das Verdrehsicherungs-Profil 24 und mit ihm das Gehäuse 4 der Gasfeder 2 sind demnach verdrehfest, also nicht um die Achse 3 drehbar, in der Führungsbüchse 5 in Richtung der Achse 3 verschiebbar geführt. Ein am Befestigungsabschnitt 16 der Gasfeder 2 befestigter Stuhlsitz od.dgl. kann also gegenüber der Führungsbüchse 5 nicht verdreht werden. Damit diese Undrehbarkeit auch gegenüber dem Standrohr 1 gegeben ist, ist die Führungsbüchse 5 mittels mehrerer radial zur Achse 3 verlaufender Befestigungsschrauben 32 mit dem Standrohr 1 verbunden. Die Führungsbüchse 5 kann - wie in der Zeichnung dargestellt - massiv ausgebildet sein.

Das Standrohr 1 und die Führungsbüchse 5 können auch einstückig, beispielsweise aus Kunststoff ausgebildet sein. Einstückige, aus Kunststoff bestehende Standrohre, die keine gesonderte Führungsbüchse aufweisen, sondern bei denen die Führungsflächen unmittelbar im Standrohr ausgebildet sind, sind beispielsweise aus der DE 42 00 786 A1 (entsprechend US Ser. No. 08/004 244) bekannt.

## Patentansprüche

1. Längenverstellbare Säule für Stühle, Tische od.dgl. mit einem Standrohr (1) und mit einem konzentrisch zu einer gemeinsamen Mittel-Längs-Achse (3) hierin angeordneten, pneumatischen oder hydropneumatischen Längenverstellelement, dessen Gehäuse (4) in einer Führung des Standrohrs (1) radial abgestützt und in Richtung der Achse (3) verschiebbar geführt ist und dessen Kolbenstange (7) im Bereich ihres freien Endes an einer Bodenplatte (9) des Standrohres (1) in Richtung der Achse (3) festgelegt ist, wobei das Gehäuse (4) mittels eines nichtkreiszylindrischen unrunden Querschnitts in einer im Querschnitt angepaßten Ausnehmung (29) der Führung in Richtung der Achse (3) verschiebbar geführt ist, dadurch gekennzeichnet, daß auf dem Gehäuse (4) ein gegenüber diesem gesondertes Verdrehsicherungs-Profil (24) mit mindestens einem parallel zur Achse (3) verlaufenden Steg (26) befestigt ist, wobei der Steg in einer angepaßten nutartigen Ausnehmung (30) der Führung (Führungsbüchse 5) geführt ist, die gegenüber dem Standrohr (1) undrehbar ist.

2. Säule nach Anspruch 1, dadurch gekennzeichnet, daß das Verdrehsicherungs-Profil (24) einen ringzylindrischen Abschnitt (25) aufweist, mit dem der mindestens eine Steg (26) einstückig ausgebildet ist.

3. Säule nach Anspruch 1 oder 2, dadurch gekennzeichnet, daß das Verdrehsicherungs-Profil (24) aus Aluminium oder einer Aluminiumlegierung besteht.

4. Säule nach einem der Ansprüche 1 bis 3, dadurch gekennzeichnet, daß das Verdrehsicherungs-Profil (24) ein Strangpreßteil ist.

5. Säule nach einem der Ansprüche 1 bis 4, dadurch gekennzeichnet, daß das Verdrehsicherungs-Profil (24) mit dem Gehäuse (4) der Gasfeder (2) durch eine Schrumpf-Preß-Verbindung verbunden, ist.

6. Säule nach einem der Ansprüche 1 bis 5, dadurch gekennzeichnet, daß der mindestens eine Steg (26) Flanken (27) aufweist, die etwa parallel zu einem von der Achse (3) durch den Steg (26) verlaufenden Radius (28) verlaufen und die gegen entsprechend angepaßte Anlageflächen (31) der nutartigen Ausnehmung (30) anliegen.

7. Säule nach einem der Ansprüche 1 bis 6, dadurch gekennzeichnet, daß die Führung durch eine vom Standrohr (1) gesonderte Führungsbüchse (5) gebildet ist, die mit dem Standrohr (1) drehfest verbunden ist.

## Claims

1. An adjustable-length column for chairs, tables or the like comprising an upright tube (1) and a pneumatic or hydropneumatic length-adjusting element arranged therein concentrically of a common central longitudinal axis (3), the housing (4) of which element is radially supported in a guide of the upright tube (1) and displaceably guided in the direction of the axis (3), and the piston rod (7) of which element is arrested, in the vicinity of its free end, on a bottom plate (9) of the upright tube (1) in the direction of the axis (3), the housing (4) being guided, by means of a non-circular-cylindrical and non-circular cross-section, displaceably in the direction of the axis (3) in a recess (29) suited in cross-section, characterized in that a profile (24) guarding against twisting separate from the housing (4) is fastened on the latter with at least one web (26) extending in parallel to the axis (3), the web being guided in an adapted groove-like recess (30) of the guide (guide bushing 5) which is non-rotatable in relation to the upright tube (1).

2. A column according to claim 1, characterized in that the profile (24) guarding against twisting has an annular cylindrical section (25) with which the at least one web (26) is formed in one piece.

3. A column according to claim 1 or 2, characterized in that the profile (24) guarding against twisting consists of aluminium or an aluminium alloy.

4. A column according to one of claims 1 to 3, characterized in that the profile (24) guarding against twisting is an extrusion-molded part.

5. A column according to one of claims 1 to 4, characterized in that the profile (24) guarding against twisting is connected with the housing (4) of the gas spring (2) by shrunk-on press fit.

6. A column according to one of claims 1 to 5, characterized in that the at least one web (26) has flanks (27) which are about parallel to a radius (28) extending from the axis (3) through the web (26) and which bear against correspondingly suited contact surfaces (31) of the groove-like recess (30).

7. A column according to one of claims 1 to 6, characterized in that the guide is formed by a guide bushing (5) separate from the upright tube (1), which guide bushing (5) is non-rotatably connected with the upright tube (1).

## Revendications

1. Colonne réglable en hauteur pour chaises, tables ou analogues, comprenant un tube vertical (1) et un élément pneumatique ou hydropneumatique de réglage en hauteur qui y est logé de manière concentrique à un axe longitudinal médian commun (3), dont le boîtier (4) prend appui radialement dans un moyen de guidage du tube vertical (1) et est guidé coulissant dans le sens de l'axe (3) et dont la tige de piston (7) est immobilisée, dans le sens de l'axe (3), dans la zone de son extrémité libre contre une plaque de fond (9) du tube vertical (1), le boîtier (4) étant guidé de manière coulissante dans le sens de l'axe (3) à l'aide d'une section transversale non ronde non cylindro-circulaire dans un évidement à section transversale adaptée (29) du moyen de guidage, caractérisée en ce que, sur le boîtier (4), est fixé un profil de blocage en rotation (24) séparé de celui-ci et comprenant au moins une languette (26) parallèle à l'axe (3), la languette étant guidée dans un évidement adapté en forme de rainure (30) du moyen de guidage (douille de guidage 5) qui ne peut pas tourner par rapport au tube vertical (1).

2. Colonne selon la revendication 1, caractérisée en ce que le profil de blocage en rotation (24) présente une portion cylindro-annulaire (25) avec laquelle la languette (26), au nombre d'au moins une, est conçue d'un seul tenant.

3. Colonne selon la revendication 1 ou 2, caractérisée en ce que le profil de blocage en rotation (24) est réalisé en aluminium ou dans un alliage d'aluminium.

4. Colonne selon l'une des revendications 1 à 3, caractérisée en ce que le profil de blocage en rotation (24) est une pièce extrudée.

5. Colonne selon l'une des revendications 1 à 4, caractérisée en ce que le profil de blocage en rotation (24) est relié au boitier (4) du ressort pneumatique (2) par un assemblage par emmanchement.

6. Colonne selon l'une des revendications 1 à 5, caractérisée en ce que la languette (26), au nombre d'au moins une, comporte des flancs (27) qui sont sensiblement parallèles à un rayon (28) partant de l'axe (3) et passant par la languette (26) et qui sont appliqués contre des surfaces d'appui adaptées en conséquence (31) de l'évidement (30) en forme de rainure.

7. Colonne selon l'une des revendications 1 à 6, caractérisée en ce que le moyen de guidage est formé par une douille de guidage (5) qui est séparée du tube vertical (1) et qui est reliée au tube vertical (1) de manière bloquée en rotation.
